# EUROPEAN PATENT SPECIFICATION

(11) **EP 4 194 914 B1**
(45) Date of publication and mention of the grant of the patent: **18.06.2025**
(21) Application number: 21852220.9
(22) Date of filing: 30.07.2021
(51) Int. Cl.: G02B 6/44

(54) **AIR-BLOWN OPTICAL FIBER CABLE**
LUFTGEBLASENES GLASFASERKABEL
CÂBLE DE FIBRE OPTIQUE DE SOUFFLAGE D'AIR

(30) Priority: 07.08.2020 CN 202021630323 U
(43) Date of publication of application: 14.06.2023
(73) Proprietor: Fiberhome Telecommunication Technologies Co., Ltd, Wuhan, Hubei 430000 (CN)
(72) Inventor: BAI, Wenjie, Wuhan, Hubei 430000 (CN); CHEN, Hong, Wuhan, Hubei 430000 (CN); HU, Cong, Wuhan, Hubei 430000 (CN)
(74) Representative: Kuhnen & Wacker Patent- und Rechtsanwaltsbüro PartG mbB
(86) International application number: PCT/CN2021/109659
(87) International publication number: WO 2022/028326

(56) References cited:
- EP-A1- 2 579 079
- EP-A1- 3 657 226
- WO-A1-2020/075734
- CN-A- 107 861 210
- CN-U- 202 649 574
- CN-U- 203 587 849
- CN-U- 203 587 849
- CN-U- 212 723 478
- US-A1- 2007 280 611

## Description

### Field of the Invention

The present application relates to the technical field of optical fiber cable manufacturing, in particular to an air-blown optical fiber cable.

### Background of the Invention

As a new construction method, air-blown laying is very popular in developed countries with high labor costs. With the promotion of European and American operators, more and more telecom companies and construction teams around the world are used to laying optical fiber cables in this way. Therefore, how to ensure the stable performance and affordable price of the optical fiber cable during the process of air-blown laying has become a problem that many optical fiber cable companies think about.

During the sheathing process of the existing air-blown optical fiber cable, the sheath material will crystallize after being extruded, causing the optical fiber cable to shrink in the water tank, then the aramid material of the strengthening layer will produce part of excess length, and at the same time, the optical fiber will also produce part of excess length. The excess length of the aramid fiber leads to a decrease in the tensile performance of the optical fiber cable, and the excess length of the optical fiber causes macrobending of the optical fiber in the tube, which increases the loss of the optical fiber cable.

Moreover, during the process of air-blowing construction of the air-blown optical fiber cable, high-pressure gas is used to suspend the optical fiber cable in the micro-tube. When the optical fiber cable itself is propelled by the driver, the high-speed flowing gas carries the optical fiber cable forward together. When the optical fiber cable encounters situations such as turning, it will inevitably contact the inner wall of the micro-tube to form a friction, which hinders the high-speed advancement of the optical fiber cable.

At present, the traditional central tube-type air-blown optical fiber cable mainly relies on the sheath material to reduce the surface friction of the optical fiber cable. However, due to the large gap between the basic materials of China and the materials of world-class enterprises, there is not much room for improvement of the materials themselves. However, redesigning the optical fiber cable from the aspect of structure itself has strong operability. The surface friction F=µ*p*S, if the material is determined, µ is determined, and if the construction equipment is determined, p is determined. Adjusting the contact area between the optical fiber cable and the micro-tube can directly change the surface friction of the optical fiber cable during the process of construction. Therefore, how to change the surface friction of the optical fiber cable during the process of construction through adjusting the contact area between the optical fiber cable and the micro-tube has become an urgent problem to be solved.

EP 3 657 226 A1 discloses a superfine anti-termite air-blown optical cable and a fabrication method thereof. CN 203 587 849 U discloses an ultra-miniature air-blown optical cable. EP 2 579 079 A1 discloses an optical cable structure suitable for air blowing installation and a manufacturing method thereof. CN 107 861 210 A discloses a full-dry air-blowing micro optical cable.

### Summary of the Invention

The invention is defined in claim 1, and provides an air-blown optical fiber cable so as to solve the problem in the related art that the optical fiber cable has a large contact area with the inner wall of the micro-tube when the optical fiber cable encounters situations such as turning, resulting in a large friction and hindering the high-speed advancement of the optical fiber cable.

According to the invention, an air-blown optical fiber cable is provided, comprising:
a cable core;
a loose tube, which is sleeved outside the cable core;
a strengthening layer, which is mesh-shaped and is wrapped around the loose tube;
an outer jacket, which is wrapped around the strengthening layer, at least a partial region of the outer jacket forms a drag reduction structure, and the drag reduction structure comprises a plurality of protrusions and a plurality of recesses, wherein the protrusions and the recesses are alternately connected to each other, and each of the recesses extends into the mesh of the strengthening layer; first gaps, which are formed between every two adjacent protrusions and a recess located therebetween; and second gaps, which are formed between every two adjacent recesses and a protrusion located therebetween, and the strengthening layer extends into the second gaps and is connected to the protrusions.

The strengthening layer of the present application is mesh-shaped, so that at least a partial region of the outer jacket forms a drag reduction structure, and the protrusions and the recesses of the drag reduction structure are alternately connected to each other, and the recesses extend into the mesh of the strengthening layer, which increases the resistance of the airflow during the process of the construction of the air-blown optical fiber cable, and has a stronger drive for the air-blown optical fiber cable. The first gaps that are formed between every two adjacent protrusions and a recess located therebetween are not in contact with a micro-tube, and merely the protrusions are in contact with the micro-tube, which reduces the contact area between the outer jacket and the micro-tube, and reduces surface friction of the optical fiber cable. The second gaps are formed between every two adjacent recesses and a protrusion located therebetween, and the strengthening layer extends into the second gaps and is connected to the protrusions, the drag reduction structure formed on the outer jacket reduces the ability of the molecular chain ordering of the outer jacket material to make the crystallinity of the outer jacket reduce, thereby reducing the excess length of the air-blown optical fiber cable and making the performance more stable.

In some embodiments, each of the recesses is connected to the loose tube. The strengthening layer is wrapped between the loose tube and the outer jacket, and the recesses of the loose tube and the drag reduction structure are integrated at the mesh position of the strengthening layer, so that the strengthening layer and the outer jacket will not slide relative to each other during the process of construction traction, the structure is more reliable, and the stretching of the optical fiber cable is reduced.

In some embodiments, there are a plurality of drag reduction structures, and the plurality of the drag reduction structures are distributed at intervals along an axial direction of the loose tube, and the drag reduction structures are in a shape of an annular surrounding along a circumferential direction of the loose tube. The annular-shaped drag reduction structure can reduce the surface friction in the circumferential direction of the optical fiber cable.

In some embodiments, there are a plurality of drag reduction structures, and the plurality of the drag reduction structures are distributed at intervals along a circumferential direction of the loose tube. The strip-shaped drag reduction structure can reduce the surface friction in an axial direction of the optical fiber cable.

In some embodiments, the drag reduction structures are in a shape of a spiral surrounding along an axial direction of the loose tube. The spiral drag reduction structure can reduce the surface friction in a spiral direction of the optical fiber cable.

In some embodiments, all of the outer jacket forms the drag reduction structure. Through extruding the entire outer jacket, the outer jacket forms a drag reduction structure that is compatible with the mesh-shaped strengthening layer, so that the contact area between the outer jacket and the micro-tube is greatly reduced, thereby greatly reducing the surface friction of the optical fiber cable, and the method of one-time extrusion molding can be adopted to save working hours.

**In** some embodiments, the drag reduction structure is formed through extruding the outer jacket.

**In** some embodiments, the protrusion is in a shape of a square or hemisphere. Through designing the structure of the protrusion, the surface friction of the optical fiber cable can be further improved, for example, the contact surface between the hemispherical protrusion and the micro-tube is smoother, and the contact area is smaller, which can have a better effect of reducing the surface friction of the optical fiber cable.

**In** some embodiments, the portion of the loose tube wrapped by the strengthening layer accounts for no more than 50% of the loose tube. Through designing the structure of the protrusion, the surface friction of the optical fiber cable can be further improved, for example, the contact surface between the hemispherical protrusion and the micro-tube is smoother, and the contact area is smaller, which can have a better effect of reducing the surface friction of the optical fiber cable.

**In** some embodiments, the cable core comprises a plurality of optical fibers.

The beneficial effects brought by the technical solution provided by the present application comprise: the strengthening layer of the present application is mesh-shaped, so that at least a partial region of the outer jacket forms a drag reduction structure, and the protrusions and the recesses of the drag reduction structure are alternately connected to each other, and the recesses extend into the mesh of the strengthening layer, which increases the resistance of the airflow during the process of the construction of the air-blown optical fiber cable, and has a stronger drive for the air-blown optical fiber cable. The first gaps that are formed between every two adjacent protrusions and a recess located therebetween are not in contact with a micro-tube, and merely the protrusions are in contact with the micro-tube, which reduces the contact area between the outer jacket and the micro-tube, and reduces surface friction of the optical fiber cable. The second gaps are formed between every two adjacent recesses and a protrusion located therebetween, and the strengthening layer extends into the second gaps and is connected to the protrusions, the drag reduction structure formed on the outer jacket reduces the ability of the molecular chain ordering of the outer jacket material to make the crystallinity of the outer jacket reduce, thereby reducing the excess length of the air-blown optical fiber cable and making the performance more stable.

The present application provides an air-blown optical fiber cable, due to the strengthening layer of the present application is mesh-shaped, so that at least a partial region of the outer jacket forms a drag reduction structure, and the protrusions and the recesses of the drag reduction structure are alternately connected to each other, and the recesses extend into the mesh of the strengthening layer, which increases the resistance of the airflow during the process of the construction of the air-blown optical fiber cable, and has a stronger drive for the air-blown optical fiber cable. The first gaps that are formed between every two adjacent protrusions and a recess located therebetween are not in contact with a micro-tube, and merely the protrusions are in contact with the micro-tube, and the second gaps are formed between every two adjacent recesses and a protrusion located therebetween, and the strengthening layer extends into the second gaps and is connected to the protrusions, therefore, the first gaps reduce the contact area between the outer jacket and the micro-tube, and reduce surface friction of the optical fiber cable. The drag reduction structure formed on the outer jacket reduces the ability of the molecular chain ordering of the outer jacket material to make the crystallinity of the outer jacket reduce, thereby reducing the excess length of the air-blown optical fiber cable and making the performance more stable.

### Brief Description of the Drawings

In order to better illustrate the technical solution in the embodiments of the present application, the following will briefly introduce the drawings needed in the description of the embodiments, and it is obvious that the drawings in the following description are part of embodiments of the present application, for those of ordinary skill in the art, other drawings may also be obtained based on these drawings without any inventive effort.
Fig. 1 is a three-dimensional structure diagram of an air-blown optical fiber cable in the embodiment of the present application;
Fig. 2 is a cross-sectional view of an air-blown optical fiber cable in the embodiment of the present application;
Fig. 3 is a structural diagram of an annular-shaped drag reduction structure;
Fig. 4 is a structural diagram of a strip-shaped drag reduction structure.

In the figure: 1-cable core; 10-optical fiber; 2-loose tube; 3-strengthening layer; 7-outer jacket; 40-drag reduction structure; 400-protrusion; 401-recesse; 402-the first gap; 403- the second gap.

### Detailed Description of the Embodiments

In order to make the purpose, technical solutions and advantages of the embodiments of the present application clearer, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by a person of ordinary skill in the art without inventive efforts shall fall within the protection scope of the present application.

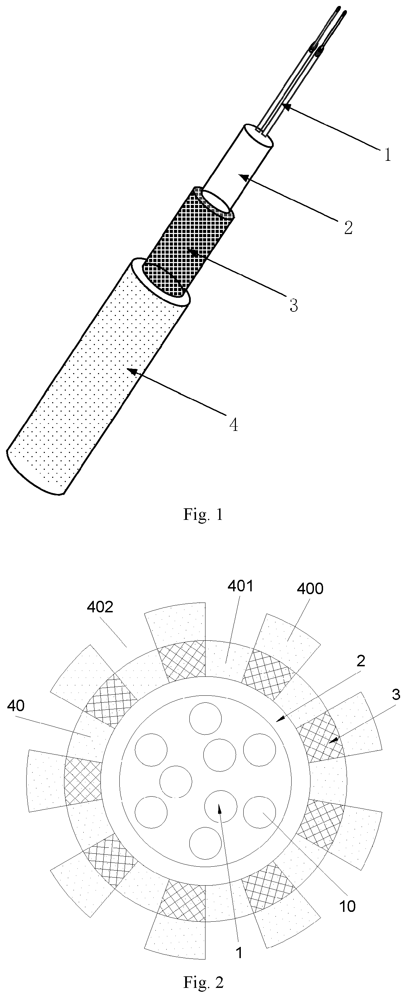

As shown in Fig. 1 and Fig. 2, an embodiment of the present application provides an air-blown optical fiber cable, which comprises a cable core 1, a loose tube 2, a strengthening layer 3 and an outer jacket 4. The cable core 1 comprises a plurality of optical fibers 10, the loose tube 2 is sleeved outside the cable core 1, and the optical fibers 10 can be loosely placed in the loose tube 2. The loose tube 2 is a tube made of polypropylene or nylon that protects the optical fibers 10 from internal stress and external side pressure, with an outer diameter of 1.7±0.1mm and an inner hole of 1.3±0.1mm. Fiber paste is filled in the loose tube 2 to prevent longitudinal water seepage in the loose tube 2. The strengthening layer 3 is mesh-shaped and is wrapped around the loose tube 2. The outer jacket 4 is wrapped around the strengthening layer 3, and the material of the outer jacket 4 is polyethylene, nylon and other materials. The method of extrusion molding is adopted, the wall thickness of the outer jacket 4 is 0.3±0.1mm, and the outer diameter is 2.5±0.15mm. At least a partial region of the outer jacket 4 forms a drag reduction structure 40, the drag reduction structure 40 comprises a plurality of protrusions 400 and a plurality of recesses 401, the protrusions 400 protrudes toward the direction away from the loose tube 2, and the recesses 401 protrudes toward the direction close to the loose tube 2. The protrusions 400 and the recesses 401 are alternately connected to each other, and each of the recesses 401 extends into the mesh of the strengthening layer 3. The first gaps 402 are formed between every two adjacent protrusions 400 and a recess 401 located therebetween, the first gaps 402 do not contact a micro-tube, and merely the protrusions 400 contact the micro-tube, such that a contact area between the outer jacket 4 and the micro-tube is reduced, thus reducing the surface friction of an optical fiber cable. The second gaps 403 are formed between every two adjacent recesses 401 and a protrusion 400 located therebetween, and the strengthening layer 3 extends into the second gaps 403 and is connected to the protrusions 400.

The principle of changing the surface friction of the optical fiber cable during the process of construction by the air-blown optical fiber cable in the embodiment of the present application is as follows:
The strengthening layer 3 in the embodiment of the present application is mesh-shaped, so that at least a partial region of the outer jacket 4 forms a drag reduction structure 40, and the protrusions 400 and the recesses 401 of the drag reduction structure 40 are alternately connected to each other, and the recesses 401 extend into the mesh of the strengthening layer 3, which increases the resistance of the airflow during the process of the construction of the air-blown optical fiber cable, and has a stronger drive for the air-blown optical fiber cable. The first gaps 402 are formed between every two adjacent protrusions 400 and a recess 401 located therebetween, the first gaps 402 do not contact a micro-tube, and merely the protrusions 400 contact the micro-tube, such that a contact area between the outer jacket 4 and the micro-tube is reduced, thus reducing the surface friction of an optical fiber cable. The second gaps 403 are formed between every two adjacent recesses 401 and a protrusion 400 located therebetween, and the strengthening layer 3 extends into the second gaps 403 and is connected to the protrusions 400. The drag reduction structure 40 formed on the outer jacket 4 reduces the ability of the molecular chain ordering of the outer jacket 4 material to make the crystallinity of the outer jacket 4 reduce, thereby reducing the excess length of the air-blown optical fiber cable and making the performance more stable.

Optionally, each of the recesses 401 is connected to the loose tube 2. The strengthening layer 3 is wrapped between the loose tube 2 and the outer jacket 4, and the recesses 401 of the loose tube 2 and the drag reduction structure 40 are integrated at the mesh position of the strengthening layer 3, so that the strengthening layer 3 and the outer jacket 4 will not slide relative to each other during the process of construction traction, the structure is more reliable, and the stretching of the optical fiber cable is reduced.

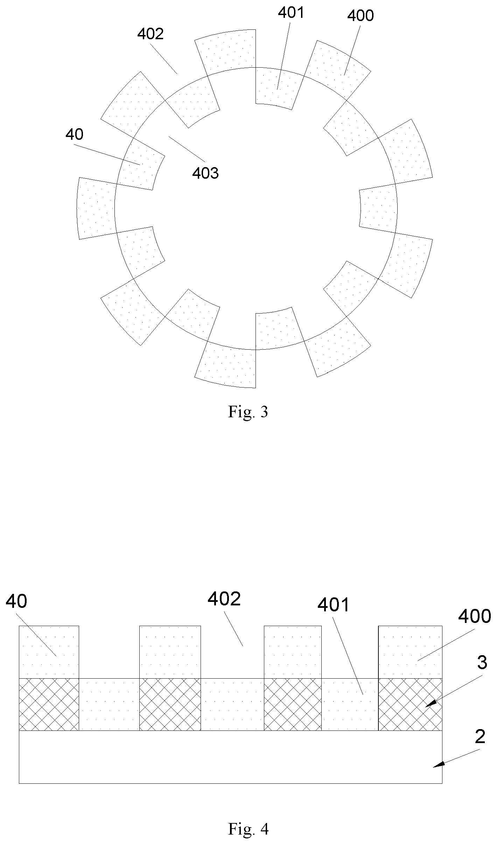

Optionally, as shown in Fig. 3, there are a plurality of drag reduction structures 40, and the plurality of the drag reduction structures 40 are distributed at intervals along an axial direction of the loose tube 2, and the drag reduction structures 40 are in a shape of an annular surrounding along a circumferential direction of the loose tube 2. The annular-shaped drag reduction structure 40 can reduce the surface friction in the circumferential direction of the optical fiber cable.

Optionally, as shown in Fig. 4, there are a plurality of drag reduction structures 40, and the plurality of the drag reduction structures 40 are distributed at intervals along a circumferential direction of the loose tube 2, and the drag reduction structures 40 are in a shape of a strip. The strip-shaped drag reduction structure 40 can reduce the surface friction in the axial direction of the optical fiber cable.

Optionally, the drag reduction structures 40 are in a shape of a spiral surrounding along an axial direction of the loose tube 2. The spiral drag reduction structure 40 can reduce the surface friction in the spiral direction of the optical fiber cable.

Through setting different distributions of the drag reduction structures 40, the air-blown optical fiber cables with different requirements are adapted, and the matching air-blown optical fiber cables are used according to the specific requirements for reducing the surface friction of the air-blown optical fiber cables.

Preferably, all of the outer jacket 4 forms the drag reduction structure 40. The drag reduction structure 40 is formed through extruding the outer jacket 4. Through extruding the entire outer jacket 4, the outer jacket 4 forms a drag reduction structure 40 that is compatible with the mesh-shaped strengthening layer 3, so that the contact area between the outer jacket 4 and the micro-tube is greatly reduced, thereby greatly reducing the surface friction of the optical fiber cable, and the method of one-time extrusion molding can be adopted to save working hours.

Further, the protrusion 400 is in a shape of a square or hemisphere. Through designing the structure of the protrusion 400, the surface friction of the optical fiber cable can be further improved, for example, the contact surface between the hemispherical protrusion 400 and the micro-tube is smoother, and the contact area is smaller, which can have a better effect of reducing the surface friction of the optical fiber cable.

Further, the portion of the loose tube 2 wrapped by the strengthening layer 3 accounts for no more than 50% of the loose tube 2. The strengthening layer 3 adopts aramid fiber material for interweaving to form a network structure, which is closely attached to the loose tube 2 and forms a whole with the loose tube 2. The coverage of the weaving is no more than 50%, so the proportion of the protrusions 400 of the drag reduction structure 40 will not exceed 50%, which can reduce the contact area between the drag reduction structure 40 and the microtube by at least 50%. The weaved mesh-shaped structure avoids the tensile strain caused by the excess length of the aramid fiber, which can improve the mechanical properties of the optical fiber cable.

Further, the cable core 1 comprises a plurality of optical fibers 10, and the optical fibers 10 are single-mode or multi-mode optical fibers for single or multi-channel communication, a total of 12, and is distinguished by blue, orange, green, brown, gray, white, red, black, yellow, purple, pink and turquoise.

In the description of the present application, it should be noted that the orientation or positional relationship indicated by the terms "upper", "lower", etc. are based on the orientation or positional relationship shown in the drawings, which is only for the convenience of describing the present application and simplifying the description, instead of indicating or implying that the pointed device or element must have a specific orientation, be configured and operated in a specific orientation, therefore it cannot be understood as a limitation of the present application. Unless otherwise clearly specified and limited, the terms "installation", "connected" and "connection" should be understood in a broad sense. For example, it can be a fixed connection, a detachable connection, or an integral connection; further can be a mechanical connection, or an electrical connection; further can be directly connected, or indirectly connected through an intermediate medium, or can be the internal communication between two components. For those of ordinary skill in the art, the specific meanings of the above-mentioned terms in the present application can be understood according to specific circumstances.

It should be noted that relational terms such as "first" and "second" are only for distinguishing one entity or operation from another entity or operation in this the present application, and do not necessarily require or imply any such actual relationship or order between these entities or operations. Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a.." does not exclude the existence of other same elements in the process, method, article, or device comprising the elements.

The above-mentioned are only the embodiments of the present application, so that those skilled in the art can understand or implement the present application. For those skilled in the art, various modifications to these embodiments will be obvious, and the general principles defined herein can be implemented in other embodiments without departing from the scope of the invention which is defined in the appended claims.

## Claims

1. An air-blown optical fiber cable, comprising:
a cable core (1);
a loose tube (2), which is sleeved outside the cable core (1);
a strengthening layer (3), which is mesh-shaped and is wrapped around the loose tube (2);
an outer jacket (4), which is wrapped around the strengthening layer (3), at least a partial region of the outer jacket (4) forms a drag reduction structure (40), and the drag reduction structure (40) comprises a plurality of protrusions (400) and a plurality of recesses (401), wherein the protrusions (400) and the recesses (401) are alternately connected to each other, and each of the recesses (401) extends into the mesh of the strengthening layer (3); first gaps (402), which are formed between every two adjacent protrusions (400) and a recess (401) located therebetween; and second gaps (403), which are formed between every two adjacent recesses (401) and a protrusion (400) located therebetween, and the strengthening layer (3) extends into the second gaps (403) and is connected to the protrusions (400).

2. The air-blown optical fiber cable according to claim 1, wherein each of the recesses (401) is connected to the loose tube (2).

3. The air-blown optical fiber cable according to claim 1, wherein there are a plurality of drag reduction structures (40), and the plurality of the drag reduction structures (40) are distributed at intervals along an axial direction of the loose tube (2), and the drag reduction structures (40) are in a shape of an annular surrounding along a circumferential direction of the loose tube (2).

4. The air-blown optical fiber cable according to claim 1, wherein there are a plurality of drag reduction structures (40), and the plurality of the drag reduction structures (40) are distributed at intervals along a circumferential direction of the loose tube (2).

5. The air-blown optical fiber cable according to claim 1, wherein the drag reduction structures (40) are in a shape of a spiral surrounding along an axial direction of the loose tube (2).

6. The air-blown optical fiber cable according to claim 1, wherein all of the outer jacket (4) forms the drag reduction structure (40).

7. The air-blown optical fiber cable according to claim 1, wherein the drag reduction structure (40) is formed through extruding the outer jacket (4).

8. The air-blown optical fiber cable according to claim 1, wherein the protrusion (400) is in a shape of a square or hemisphere.

9. The air-blown optical fiber cable according to claim 1, wherein the portion of the loose tube (2) wrapped by the strengthening layer (3) accounts for no more than 50% of the loose tube (2).

10. The air-blown optical fiber cable according to claim 1, wherein the cable core (1) comprises a plurality of optical fibers (10).

## Patentansprüche

1. Luftgeblasenes Lichtwellenleiterkabel, aufweisend:
einen Kabelkern (1);
eine lose Röhre (2), die außerhalb des Kabelkerns (1) als Ummantelung angebracht ist;
eine Verstärkungsschicht (3), die gitterförmig ist und um die lose Röhre (2) gewickelt ist;
einen äußeren Mantel (4), der um die Verstärkungsschicht (3) gewickelt ist, wobei zumindest ein Teilbereich des äußeren Mantels (4) eine Zugverringerungsstruktur (40) bildet und die Zugverringerungsstruktur (40) eine Mehrzahl an Vorsprüngen (400) und eine Mehrzahl an Vertiefungen (401) aufweist, wobei die Vorsprünge (400) und die Vertiefungen (401) abwechselnd miteinander verbunden sind und jede der Vertiefungen (401) in das Gitter der Verstärkungsschicht (3) verläuft;
erste Lücken (402), die zwischen jeweils zwei benachbarten Vorsprüngen (400) und einer dazwischen liegenden Vertiefung (401) ausgebildet sind; und
zweite Lücken (403), die zwischen jeweils zwei benachbarten Vertiefungen (401) und einem dazwischen liegenden Vorsprung (400) ausgebildet sind, und wobei die Verstärkungsschicht (3) in die zweiten Lücken (403) verläuft und mit den Vorsprüngen (400) verbunden ist.

2. Luftgeblasenes Lichtwellenleiterkabel nach Anspruch 1, wobei jede der Vertiefungen (401) mit der losen Röhre (2) verbunden ist.

3. Luftgeblasenes Lichtwellenleiterkabel nach Anspruch 1, wobei eine Mehrzahl an Zugverringerungsstrukturen (40) vorhanden sind, und die Mehrzahl der Zugverringerungsstrukturen (40) in Intervallen entlang einer axialen Richtung der losen Röhre (2) verteilt sind, und die Zugverringerungsstrukturen (40) in einer Form einer kreisförmigen Umschließung entlang einer Umfangsrichtung der losen Röhre (2) vorhanden sind.

4. Luftgeblasenes Lichtwellenleiterkabel nach Anspruch 1, wobei eine Mehrzahl an Zugverringerungsstrukturen (40) vorhanden sind, und die Mehrzahl der Zugverringerungsstrukturen (40) in Intervallen entlang einer Umfangsrichtung der losen Röhre (2) verteilt sind.

5. Luftgeblasenes Lichtwellenleiterkabel nach Anspruch 1, wobei die Zugverringerungsstrukturen (40) in einer Form einer spiralförmigen Umschließung entlang einer axialen Richtung der losen Röhre (2) vorhanden sind.

6. Luftgeblasenes Lichtwellenleiterkabel nach Anspruch 1, wobei der gesamte äußere Mantel (4) die Zugverringerungsstruktur (40) bildet.

7. Luftgeblasenes Lichtwellenleiterkabel nach Anspruch 1, wobei die Zugverringerungsstruktur (40) durch Extrusion des äußeren Mantels (4) gebildet wird.

8. Luftgeblasenes Lichtwellenleiterkabel nach Anspruch 1, wobei der Vorsprung (400) in einer Form eines Quadrats oder einer Halbkugel gebildet ist.

9. Luftgeblasenes Lichtwellenleiterkabel nach Anspruch 1, wobei der Abschnitt der losen Röhre (2), der durch die Verstärkungsschicht (3) umwickelt ist, nicht mehr als 50 % der losen Röhre (2) ausmacht.

10. Luftgeblasenes Lichtwellenleiterkabel nach Anspruch 1, wobei der Kabelkern (1) eine Mehrzahl an optischen Fasern (10) aufweist.

## Revendications

1. Câble à fibre optique à soufflage d'air, comprenant :
une âme de câble (1) ;
un tube lâche (2), qui est gainé à l'extérieur de l'âme de câble (1) ;
une couche de renforcement (3), qui est en forme de treillis et est enroulée autour du tube lâche (2) ;
une gaine extérieure (4), qui est enroulée autour de la couche de renforcement (3), au moins une région partielle de la gaine extérieure (4) forme une structure de réduction de la traînée (40), et la structure de réduction de la traînée (40) comprend une pluralité de saillies (400) et une pluralité d'évidements (401), dans lequel les saillies (400) et les évidements (401) sont reliés les uns aux autres en alternance, et chacun des évidements (401) s'étend dans le maillage de la couche de renforcement (3) ; des premiers espaces (402), qui sont formés entre chaque paire de saillies (400) adjacentes et un évidement (401) situé entre elles ; et des seconds espaces (403), qui sont formés entre chaque paire d'évidements (401) adjacents et une saillie (400) située entre eux, et la couche de renforcement (3) s'étend dans les seconds espaces (403) et est reliée aux saillies (400).

2. Le câble à fibre optique à soufflage d'air selon la revendication 1, dans lequel chacun des évidements (401) est connecté au tube lâche (2).

3. Le câble à fibres optiques à soufflage d'air selon la revendication 1, dans lequel il existe une pluralité de structures de réduction de traînée (40), et la pluralité des structures de réduction de traînée (40) sont réparties à intervalles le long d'une direction axiale du tube lâche (2), et les structures de réduction de traînée (40) ont la forme d'un anneau entourant le tube lâche (2) dans le sens de la circonférence.

4. Le câble à fibres optiques à soufflage d'air selon la revendication 1, dans lequel il existe une pluralité de structures de réduction de traînée (40), et la pluralité des structures de réduction de traînée (40) sont réparties à intervalles le long d'une direction circonférentielle du tube lâche (2).

5. Le câble à fibre optique à soufflage d'air selon la revendication 1, dans lequel les structures de réduction de traînée (40) ont la forme d'une spirale entourant le tube lâche (2) dans une direction axiale.

6. Le câble à fibre optique à soufflage d'air selon la revendication 1, dans lequel toute la gaine extérieure (4) forme la structure de réduction de traînée (40).

7. Le câble à fibre optique à soufflage d'air selon la revendication 1, dans lequel la structure de réduction de traînée (40) est formée par extrusion de la gaine extérieure (4).

8. Le câble à fibre optique à soufflage d'air selon la revendication 1, dans lequel la saillie (400) a la forme d'un carré ou d'un hémisphère.

9. Le câble à fibre optique à soufflage d'air selon la revendication 1, dans lequel la partie du tube lâche (2) enveloppée par la couche de renforcement (3) ne représente pas plus de 50 % du tube lâche (2).

10. Le câble à fibres optiques à soufflage d'air selon la revendication 1, dans lequel l'âme du câble (1) comprend une pluralité de fibres optiques (10).
